# EUROPEAN PATENT SPECIFICATION

(11) **EP 4 488 942 B1**
(45) Date of publication and mention of the grant of the patent: **02.12.2026**
(21) Application number: 23183762.6
(22) Date of filing: 06.07.2023
(51) Int. Cl.: G06T 7/80

(54) **CALIBRATION METHOD FOR A MULTIMODAL CAMERA SET, AND CALIBRATION PATTERN**
KALIBRIERVERFAHREN FÜR EINEN MULTIMODALEN KAMERASATZ UND KALIBRIERMUSTER
PROCÉDÉ D'ÉTALONNAGE POUR UN ENSEMBLE DE CAMÉRAS MULTIMODALES, ET MOTIF D'ÉTALONNAGE

(43) Date of publication of application: 08.01.2025
(73) Proprietor: TOYOTA JIDOSHA KABUSHIKI KAISHA, Toyota-shi, Aichi-ken 471-8571 (JP)
(72) Inventor: VAN LOOCK, Mark, 1140 Brussels (BE); GUADAGNINO, Tiziano, 00168 Rome (IT); DELLA CORTE, Bartolomeo, 80010 Villaricca (IT); GRISETTI, Giorgio, 00168 Rome (IT)
(74) Representative: Cabinet Beau de Loménie

(56) References cited:
- MUHOVIC JON ET AL: "Joint Calibration of a Multimodal Sensor System for Autonomous Vehicles", MDPI SENSORS, vol. 23, no. 12, 17 June 2023 (2023-06-17), pages 5676, XP093106628, DOI: 10.3390/s23125676
- CHIA-YEN CHEN ET AL: "Intrinsic parameters calibration for multi-beam LiDAR using the Levenberg-Marquardt algorithm", IMAGE AND VISION COMPUTING NEW ZEALAND, ACM, 2 PENN PLAZA, SUITE 701 NEW YORK NY 10121-0701 USA, 26 November 2012 (2012-11-26), pages 19 - 24, XP058030078, ISBN: 978-1-4503-1473-2, DOI: 10.1145/2425836.2425841
- YAN GUOHANG ET AL: "Joint Camera Intrinsic and LiDAR-Camera Extrinsic Calibration", 2023 IEEE INTERNATIONAL CONFERENCE ON ROBOTICS AND AUTOMATION (ICRA), IEEE, 29 May 2023 (2023-05-29), pages 11446 - 11452, XP034369607, DOI: 10.1109/ICRA48891.2023.10160542
- AZA TAIMAL JAIMEN JUNIOR ET AL: "Software Tool for the Extrinsic Calibration of Infrared and RGBD Cameras Applied to Thermographic Inspection", vol. 28, no. 1, 20 November 2022 (2022-11-20), pages e18145, XP093106632, ISSN: 0121-750X, Retrieved from the Internet <URL:https://revistas.udistrital.edu.co/index.php/reving/article/download/18145/18652> DOI: 10.14483/23448393.18145

## Description

### TECHNICAL FIELD

The present disclosure relates to the field of camera vision, and more particularly to a calibration method and system for calibrating a multimodal camera set, and to a calibration pattern.

### TECHNOLOGICAL BACKGROUND

Cameras are useful to monitor a whole range of processes in many technical fields. In order to increase the accuracy with which their images can be used, the cameras must be calibrated. In the visible range, it has been proposed to calibrate color cameras, also known as RGB (Red Green Blue) cameras, using chessboard-like tags.

Attempts to transpose this method to cameras of other modalities, such as thermal cameras or depth cameras, have not proven to be satisfactory with the currently available algorithms. In addition, although methods exist to calibrate multiple color cameras, there is room for improvement as regards calibration of a multimodal camera set. An example of an existing method is given by Muhovic Jon et al.: "Joint Calibration of a Multimodal Sensor System for Autonomous Vehicles" in Sensors, 2023 (https://doi.org/10.3390/s23125676)

Therefore, there is need for a calibration method and system for calibrating a multimodal camera set.

### SUMMARY

In this respect, the present disclosure relates to a calibration method for calibrating a multimodal camera set comprising at least two cameras having different detection modalities, as defined in claim 1.

This calibration method may be implemented, at least partly, on a computer device.

Calibrating a camera set is understood as determining values of at least some parameters of at least one camera of the camera set. For these parameters, reference values may be given by the factory, but these values may not be accurate enough for some applications. The parameters may include intrinsic characteristics, i.e. internal parameters of the camera itself regardless of its environment, such as a focal length, a center of projection, etc. Alternatively or in addition, the parameters may include extrinsic characteristics, i.e. parameters of the camera with respect to its environment, such as a pose (i.e. a position and/or orientation) with respect to a reference point.

As set out before, a detection modality (or merely "modality") is a type of physical quantity that a given camera is able to detect. For instance, a detection modality may include color (including black and white or greyscale) detection, thermal detection, infrared detection and depth detection. A multimodal set of images is a set of images that were jointly captured in different modalities, e.g. captured simultaneously by different cameras of the multimodal camera set. If the images are not captured simultaneously, they should at least show the same scene acquired from a same viewpoint of the multimodal camera set. In a given multimodal set of images, each image should show at least part of the calibration pattern.

A calibration pattern is a reference target, having some known characteristics, used to calibrate the multimodal camera set. The calibration pattern might change from one multimodal set of images to another, although it is simpler and just as effective to keep the same calibration pattern throughout the acquisition step. In other words, the features of the calibration pattern may be features shared by each of the different modalities.

The field of view of the multimodal camera set is the intersection of the respective fields of view of the cameras which must detect the calibration pattern, that is, here, at least the first and second cameras. In other words, the field of view of the multimodal camera set corresponds to the combined detectable range of the relevant cameras of the set.

The calibration pattern has features in each of the modalities to be calibrated, and each one of these features can be suitably detected by a camera detecting the corresponding modality. The features may comprise, for a given modality, at least two areas having different values in said modality (for instance different colors for the color camera, different depths for the depth camera, different temperatures for the thermal camera, etc.).

A model (e.g. two-dimensional or three-dimension model) of the calibration pattern may be obtained based on known characteristics of the calibration pattern. The model may itself be multimodal, in the sense that features of different modalities may be simulated in the model. The model may be computer-generated. Otherwise, the method may rely on one or more unimodal models.

While the pre-positioning and the detecting steps may be carried out for each second image within each multimodal set of images, the deriving step globally takes all the respective second images into account in order to derive a relative pose which results in a correct relative pose of the second camera for all the second images.

In the disclosed calibration method, the pose of the calibration pattern, determined with respect to the first camera, is used to pre-position a model of the calibration pattern with respect to the second image returned by the second camera. This pre-positioning makes the matching faster and more reliable, and thereby enables to reliably derive the relative pose of the second camera with respect to the first camera. In other words, the calibration method takes benefit of information about one modality to improve calibration of another modality. Thus, the multimodal camera set can be calibrated jointly and homogeneously. If need be, factory data about the respective cameras may be taken into account for the calibration method, e.g. as initial estimates, but the calibration method intends to provides a more accurate calibration of the multimodal camera set.

The relative pose of the second camera may be derived directly with respect to the first camera, or yet indirectly, i.e. with respect to a reference point, while the pose of the first camera with respect to that reference point is known too.

Optionally, the detection modalities include at least two of color detection, thermal detection, infrared detection and depth detection. The detection modalities may include these three detection modalities. The multimodal camera set may comprise more than one camera for one or more of the modalities.

The model is pre-positioned with respect to the second image based on an estimated relative pose of the second camera with respect to the first camera. Since the cameras are rigidly fixed with respect to one another, it is possible to roughly estimate a relative pose of the cameras. This helps determining a region of the second image (i.e. image returned by the second camera) where the calibration pattern is expected to be found.

The second camera has a resolution less than or equal to a resolution the first camera. In these embodiments, the resolution of the second camera is supplemented by the additional information coming from the calibration of the first camera. Thus, the proposed calibration method enables to achieve reliable calibration even without using overly expensive cameras.

In other words, the calibration method may comprise defining, as the first camera, the camera which has the highest resolution.

The calibration method further comprises determining intrinsic characteristics of the second camera based on known characteristics of the calibration pattern and a pose of the calibration pattern with respect to the second camera. That is, once the pose of the second camera has been derived, its intrinsic characteristics may be determined, e.g. like the intrinsic characteristics of the first camera. In these embodiments, the second camera can be fully calibrated.

The deriving the relative pose of the second camera with respect to the first camera and the determining intrinsic characteristics of the second camera are carried out sequentially. In these embodiments, since it would be highly non-linear to determine the intrinsic characteristics and the relative pose (or more generally the extrinsic characteristics) of the second camera together, they are determined after one another. Determining the intrinsic characteristics may be carried out after deriving said relative pose.

The deriving the relative pose of the second camera with respect to the first camera and the determining intrinsic characteristics of the second camera are repeated one after the other for a given number of times and/or until a convergence condition is met. A convergence condition is a condition indicating that the iterations sufficiently converge so that further iterations hardly bring any improvement (as compared to a set threshold) to the values characterizing the intrinsic characteristics and/or the relative pose. In these embodiments, the iterations increase accuracy of the determination through a sort of feedback between the intrinsic characteristics and the relative pose.

In an alternative not claimed per se, the deriving the relative pose of the second camera with respect to the first camera and the determining intrinsic characteristics of the second camera are carried out as a joint optimization. Joint optimization may be preferred when the modalities at stake have similar resolutions; otherwise, separate (or sequential) optimization may provide better results, in particular for the relative pose of the second camera with respect to the first camera.

Optionally, the at least two cameras comprise a third camera, each of the at least one multimodal image comprises a third image jointly returned by the third camera, and the calibration method further comprises:
- for each multimodal set of images, pre-positioning a model of the calibration pattern in the third image returned by the third camera, based on the determined pose;
- for each multimodal set of images, detecting the calibration pattern in the third image;
- deriving a relative pose of the third camera with respect to the first camera based on a matching of the model of the calibration pattern with the detected calibration pattern in the third image of each multimodal set of images.

These steps deal with the third camera and they may be carried out independently from the steps carried out for the second camera, although they may be similar or even identical. Further, instead of taking the first camera as a reference, said determined pose may be the derived relative pose of the second camera, and/or the relative pose of the third camera may be determined with respect to the second camera (thus, indirectly with respect to the first camera). Besides, the optional features discussed about the second camera may apply to the third camera, and vice versa.

In these embodiments, three cameras of different modalities can be calibrated jointly and homogeneously using information of one another.

Optionally, the detecting comprises detecting the features of the calibration pattern as pixels exceeding an average value of the image in the modality of the second camera. This may also apply to the third camera, as the case may be. The features may be detected at least in part, e.g. borders of different areas of the features may be detected, and not necessarily the content of those areas. Detecting pixels whose value exceeds an average value is a simple and reliable technique, hence providing good results whatever the modality of the second camera.

Optionally, the at least one multimodal set of images comprises a plurality of multimodal sets of images in which the location of the calibration pattern varies in three dimensions in order to cover the field of view of the multimodal camera set, optionally at least 50 multimodal sets of images. For instance, the at least one multimodal set of images may comprise between 80 and 200 multimodal sets of images. The multimodal sets of images may be obtained by moving the calibration pattern and/or by translating and/or rotating (e.g. over three angles commonly referred to as roll, pitch and yaw) the multimodal camera set.

Optionally, the calibration method further comprises extracting features from at least one image of the at least one multimodal set of images. Features may be extracted by techniques known per se, at whichever appropriate moment. In addition or as an alternative to being carried out on the images per se, the steps of the calibration method may be carried out on the extracted features.

The present disclosure is further related to a computer program including instructions for executing the steps of the above described calibration method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described calibration method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

The present disclosure is further related to a calibration system for calibrating a multimodal camera set comprising at least two cameras having different detection modalities, as defined in claim 6.

The calibration system may be configured to carry out the above-described calibration method, and the different modules may have any of the above-disclosed functional properties.

The present disclosure further relates to a calibration pattern for use in the above-described calibration method, the calibration pattern having features in at least two different detection modalities.

Optionally, the features comprise a common pattern for said different detection modalities. This enables to handle a much simpler model of the calibration pattern and enhances homogeneity of the calibration between the different modalities.

Optionally, the features comprise, for each of the detection modalities, at least two areas having different values in said modality. The areas may be continuous or not. Area is to be understood in the broad sense including unidimensional, two-dimensional or three-dimensional regions.

Optionally, the features are non-symmetrical and/or non-periodic. Therefore, as opposed to a chessboard, drifting of the detection and matching is limited. As a consequence, the calibration is improved.

Optionally, the calibration pattern comprises a body having a first area and a second area, wherein the second area is punctured, recessed or projecting with respect to the first area, and conductive material is provided along a contour of the first area or the second area. A current may flow in the conductive material, or heat may be applied thereto in another manner, such that its temperature increases and such that it delimits the first area or the second area.

### BRIEF DESCRIPTION OF THE DRAWINGS

The invention and advantages thereof will be better understood upon reading the detailed description which follows, of embodiments given as nonlimiting examples. This description refers to the appended drawings, wherein:
- Fig. 1 is a hardware diagram of a calibration system according to an embodiment;
- Fig. 2 is a functional diagram of a calibration unit according to an embodiment;
- Fig. 3 is a flowchart of a calibration method according to an embodiment;
- Fig. 4 illustrates an example of a calibration pattern.

### DETAILED DESCRIPTION OF EMBODIMENTS

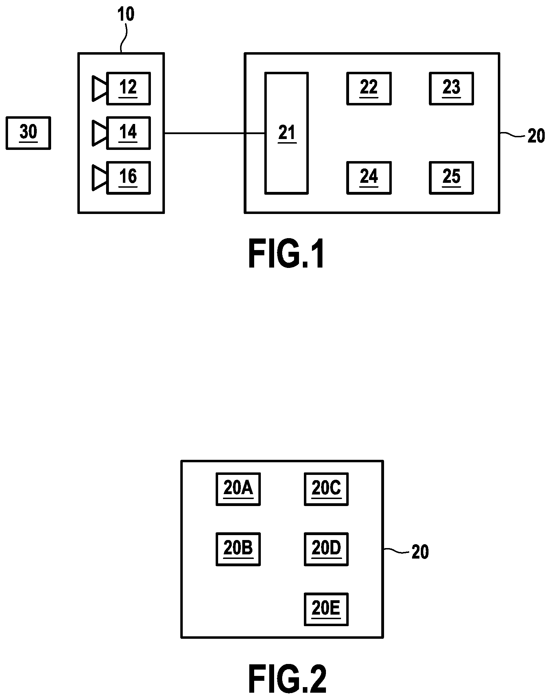

A calibration system is described with reference to Figs. 1 and 2. The calibration system is configured to help calibrating a multimodal camera set 10. In this embodiment, the multimodal camera set comprises at least two cameras having different detection modalities, here a first camera 12, a second camera 14 and a third camera 16. In this example, the first camera 12 may be an RGB camera, the second camera 14 may be a thermal camera and the third camera 16 may be a depth camera. Each type of camera is known per se in the art. Other numbers and/or types of cameras are encompassed, e.g. several cameras per modality, or other modalities such as infrared detection. Besides, the camera modalities could be switched.

The cameras 12, 14, 16 of the multimodal camera set 10 are rigidly fixed with respect to one another, such that the relative pose (e.g. position and orientation) of the second camera 14 and the third camera 16 may be referenced with respect to the first camera 12. For instance, the cameras 12, 14, 16 may be mounted on a common rig or the like. Here, it is assumed that the first camera 12 has the highest resolution of all cameras of the multimodal camera set 10, which is why it is taken as a reference, but other reference choices may be made too.

In order to calibrate the multimodal camera set 10, the calibration system comprises a calibration unit 20 and a calibration pattern 30. The calibration pattern 30 has features in each of the different detection modalities to calibrate. For instance, here, as will be detailed hereinafter, the calibration pattern 30 may have color, thermal and depth features.

As shown diagrammatically in Fig. 1, the calibration pattern 30 is to be placed in a field of view of the multimodal camera set 10, i.e. simultaneously in the field of view of each of the cameras 12, 14, 16 to calibrate.

The calibration unit 20 has the hardware architecture of a computer, as illustrated schematically in Fig. 1, and comprises in particular a processor 22, a read-only memory 23, a random access memory 24, a non-volatile memory 25 and means of communication 21 with the multimodal camera set 10 enabling the calibration unit 20 to obtain multimodal sets of images acquired by the multimodal camera set 10. The calibration unit 20 and the multimodal camera set 10 are, for example, connected via a digital data bus or a serial interface (e.g., USB (Universal Serial Bus) interface) or wirelessly, as known per se.

The multimodal sets of images may not be acquired by the calibration unit 20 directly from the multimodal camera set 10: the multimodal camera set 10 may be operated to capture the images, which images are stored for an arbitrary time before being retrieved (hence, acquired) by the calibration unit 20. In the meantime, the images may be pre-processed, e.g. through feature extraction techniques.

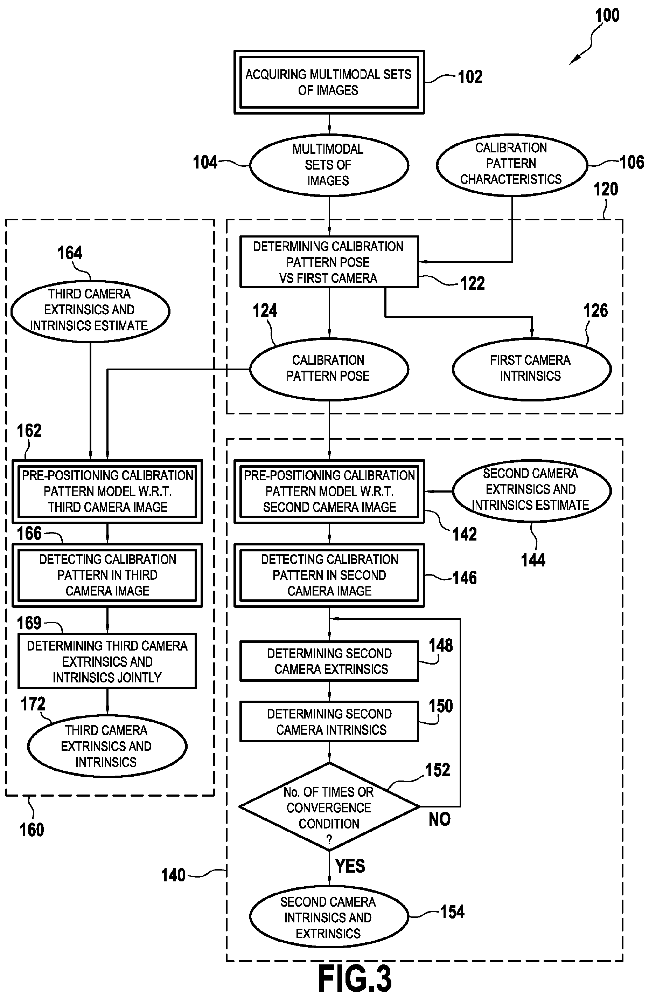

The read-only memory 23 of the calibration unit 20 constitutes a storage medium in accordance with the present disclosure, readable by the processor 22 and on which is stored a computer program in accordance with the present disclosure, comprising instructions for the execution of the steps of a calibration method according to the present disclosure, an example of which is described later with reference to Fig. 3.

This computer program defines, in an equivalent manner, functional modules of the calibration unit capable of implementing the steps of the calibration method according to the invention. Thus, in particular, as shown in Fig. 2, this computer program defines an acquisition module 20A capable of acquiring at least one multimodal set of images, a determination module 20B capable of determining intrinsic characteristics of the first camera 12 and a pose of the calibration pattern 30 with respect to the first camera 12, a pre-positioning module 20C capable of pre-positioning a model of the calibration pattern 30 with respect to the respective second images, a detection module 20D capable of detecting the calibration pattern in the respective second images and a deriving module 20E for deriving a relative pose of the second camera 14 with respect to the first camera 12. The functions of these modules are described in more detail with reference to the steps of the calibration method.

Figure 3 is a flowchart of a calibration method 100 according to an embodiment. In this flowchart, elliptic frames denote data, while rectangular frames denote method steps. In particular, double-framed steps indicate that these steps are repeated for each multimodal set of images, as will be detailed below.

In addition, the calibration method 100 can be generally divided in a first branch 120 relating to calibration of the first camera 12, a second branch 140 relating to the calibration of the second camera 14, and a third branch 160 relating to the calibration of the third camera 16. As explained before, the second branch 140 and the third branch 160 leverage the pose of the calibration pattern with respect to the first camera 12, obtained in the first branch 120, to improve the calibration of the second camera 14 and the third camera 16.

Although the calibration method 100 will be described with respect to three cameras 12, 14, 16, it may be applied to only two cameras, in which case one of the second branch 140 and the third branch 160 may be ignored. Conversely, at least one of the second branch 140 and the third branch 160 may be duplicated if more cameras are to calibrate.

The calibration method 100 comprises, as shown in Fig. 1, placing the calibration pattern 30 in the field of view of the multimodal camera set 10. Once this has been done, the calibration method 100 comprises a step 102 of acquiring at least one multimodal set of images of the calibration pattern 30 with the cameras to calibrate, namely at least two of the first camera 12, the second camera 14 and the third camera 16, here all of them.

For instance, the cameras 12, 14, 16 are triggered to capture images showing the calibration pattern 30 at least in part, in such a way that neither the pose of the multimodal camera set 10 nor a pose of the calibration pattern 30 changes between acquisition through the different cameras 12, 14, 16. This results in a first image returned by the first camera 12, a second image jointly returned by the second camera 14 and a third image jointly returned by the third camera 16. Together, these three images form a multimodal set of images.

Other multimodal sets of images may be acquired in the same way. In particular, it is desirable to acquire a plurality of multimodal sets of images in which the calibration pattern 30 varies in three dimensions in order to cover the field of view of the multimodal camera set 10. For instance, the calibration pattern 30 and/or the multimodal camera set 10 may be moved so that in the multimodal sets of images, the calibration pattern 30 takes different positions within the plane of the images, both in length and width (or height). For instance, the calibration pattern 30 may be moved up to each edge of the field of view, and multimodal sets of images may be regularly acquired in-between to account for intermediate positions. Besides, as regards depth, the calibration pattern 30 may be moved between a close position in which the calibration pattern 30 occupies the whole field of view, and a far position in which the calibration pattern 30 is beyond the detectable range of the multimodal camera set 10.

In any case, to what extent the field of view of the multimodal camera set 10 is covered by the different multimodal sets of images may be chosen by the skilled person, keeping in mind that the obtained calibration will mostly be valid within the covered field of view. For instance, the inventors have determined that 50 multimodal sets of images, with the images roughly regularly taken, enable to achieve a fair calibration of the multimodal camera set for the full field of view of the cameras. Between 80 and 200 multimodal sets of images is a good compromise between the quality of the calibration and the time and resources needed to carry out this calibration.

Thus, the acquisition step 102, which is carried out as many times as desired, results in multimodal sets of images 104, each comprising a first image, a second image and a third image.

Besides, characteristics 106 of the calibration pattern are assumed to be known, such as its dimensions, shape, pattern in the different modalities, 3D structure, etc.

The calibration method 100 further comprises a determination step 122 for determining intrinsic characteristics of the first camera 12 and a pose of the calibration pattern 30 with respect to the first camera 12 based on the at least one first image and known characteristics 106 of the calibration pattern. Specifically, knowing the characteristics 106 of the calibration pattern, an optimization can be carried out to determine the pose of the calibration pattern 30 with respect to the first camera so that it is consistent with the respective first images of the multimodal sets of images 104. For instance, techniques such as homography estimation may be used.

This determination outputs not only the calibration pattern pose 124 with respect to the first camera 12, but also intrinsic characteristics (also known as "intrinsics") 126 of the first camera 12, such as its focal length and center of projection.

Further, the calibration method 100 comprises a pre-positioning step 142 of, for each one of the multimodal sets of images 104, pre-positioning a model of the calibration pattern 30 with respect to the second image (or second camera image), based on the determined calibration pattern pose 124. A model of the calibration pattern 30 may be generated based on the known calibration pattern characteristics 106, e.g. by a computer. For instance, a point cloud representing the calibration pattern 30 may be precomputed, and the point cloud may be transformed into a model based e.g. on the determined calibration pattern pose 124, or more generally on the first camera intrinsics 126.

The model of the calibration pattern 30 is pre-positioned with respect to each second image: as the calibration pattern pose 124 has been determined with respect to the first camera 12, this pose can be used to roughly locate the calibration pattern 30 with respect to the second camera 14. If need be, an estimate 144 of some extrinsic and/or intrinsic characteristics of the second camera 14 may be used, e.g. a rough approximation of the relative transformation between the first camera 12 and the second camera 14, which can be measured beforehand. As an estimate of intrinsic characteristics, factory data may be used. More generally, the model may be pre-positioned with respect to the second image based on an estimated relative pose of the second camera 14 with respect to the first camera 12.

As shown by the double frame of the pre-positioning step 142, the pre-positioning is carried out for each second image.

Besides, the calibration method 100 comprises a detecting step 146 of, for each one of the multimodal sets of images 104, detecting the calibration pattern 30 in the second image. Although illustrated after the pre-positioning step 142, the detecting step 146 is independent therefrom and may be carried out before or in parallel to the pre-positioning step 142. Nevertheless, when carried out after the pre-positioning step 142, the detecting step 146 may leverage the pre-positioning step 142 to determine the region of interest of the second image in which the calibration pattern in located, in order to make the detection easier.

The detection per se may be carried out by any method adapted to the modality considered. For instance, the detecting step 146 may comprise detecting the features of the calibration pattern 30 as pixels exceeding an average value of the image in the modality of the second camera 14. This applies particularly well to thermal detection, in which the features to be detected in the calibration pattern are configured to be particularly hot or cold with respect to the rest of the scene to enhance detection. For instance, the inner and/or outer borders of the calibration pattern can be identified as the set of pixels in which the thermal value exceeds the average value by a predefined amount. While looking simple, this detection is highly reliable, due to the fact that it relies on the measured value per pixel directly, without requiring more complex detection pipelines for the whole calibration pattern.

In particular, the average value of the image may be computed not in the whole second image, but in the determined region of interest.

Then, the calibration method 100 comprises a deriving step step 148 of deriving a relative pose of the second camera 14 with respect to the first camera 12, possibly improving the estimate 144 when available, based on a matching of the model of the calibration pattern 30 with the detected calibration pattern in the second image of each one of the multimodal sets of images 104. For instance, the relative pose of the second camera 14 with respect to the first camera 12 may be determined as the result of a matching, i.e. an optimization which minimizes the location difference between the detected calibration pattern and the model of the calibration pattern which is reprojected with the considered relative pose. The optimization may use any desired technique, such as a least square optimization.

Specifically, the cost to be minimized in the optimization may be the reprojection error between the detected calibration pattern, and the model of the calibration pattern that is transformed in the reference frame of the second camera 14 using the relative pose of the second camera 14, or more generally the second camera extrinsic characteristics (also known as "extrinsics"), and then projected into the plane of the second image using the second camera intrinsics.

Optionally, the calibration method 100 comprises a determining step 150 of determining intrinsic characteristics of the second camera 14 based on known characteristics 106 of the calibration pattern and a pose of the calibration pattern 30 with respect to the second camera 14. Said pose can be determined as a result of the deriving step 148.

In the second branch 140, e.g. due to the non-linear nature of the optimization in the case of a thermal camera, the deriving step 148 and the determining step 150 are carried out sequentially. For the deriving step 148, it is assumed that the estimate 144 of the second camera intrinsics is accurate enough for accurately determining the second camera extrinsics.

Should this not be the case, as illustrated, the deriving step 148 and the determining step 150 could be repeated one after the other for a given number of times and/or until a convergence condition is met. Each deriving step 148, as from the second iteration, takes into account the second camera intrinsics determined at the previous iteration, which are supposedly more accurate than the estimate 144. The convergence condition may convey the fact that one or more of the determined values change, from one iteration to another, by less than a predetermined value.

Therefore, the calibration method may comprise a checking step 152 for checking whether a given number of iterations has been carried out and/or whether a convergence condition has been met by the second camera intrinsics and/or extrinsics. One or more conditions for the checking step 152 may be combined as desired.

Once the checking step 152 determines that no further iteration is needed, the second branch 140 outputs the second camera intrinsics and extrinsics 154, in particular the relative pose of the second camera 14 with respect to the first camera 12, and intrinsic characteristics of the second camera 14.

In parallel to the second branch 140, the third branch 160 defines further steps relating to the calibration of the third camera 16, e.g.: a pre-positioning step 162 of, for each one of the multimodal sets of images 104, pre-positioning a model of the calibration pattern 30 with respect to the third image (or third camera image), based on the determined calibration pattern pose 124; and a detecting step 166 of, for each one of the multimodal sets of images 104, detecting the calibration pattern 30 in the third image. As these steps may be carried out in the same way as the corresponding pre-positioning step 142 and detecting step 146 of the second branch 140, they will not be discussed further. In particular, the pre-positioning step 162 may use an estimate 164 of some extrinsics and/or intrinsics of the third camera 16.

The calibration method 100 further comprises deriving a relative pose of the third camera 16 with respect to the first camera 12 based on a matching of the model of the calibration pattern 30 with the detected calibration pattern in the third image of each one of the multimodal sets of images 104.

However, in this embodiment, as opposed to the second camera 14, the deriving the relative pose of the third camera 16 with respect to the first camera 12 and the determining intrinsic characteristics of the third camera 16 are carried out as a joint optimization 169. Joint optimization may be carried out as known per se in the art. As a result, the third camera intrinsics and extrinsics 172 are determined.

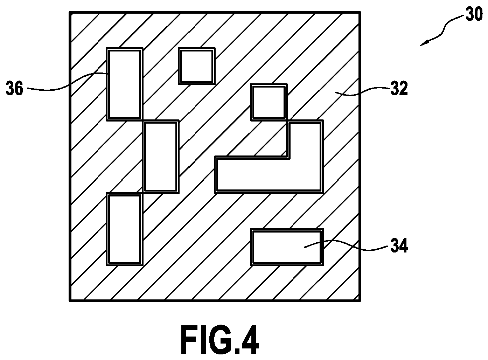

A calibration pattern 30 according to an embodiment, which can be used in the calibration method 100, is represented in Fig. 4. As mentioned above, the calibration pattern 30 has features in all the detection modalities for which it is desired to calibrate the multimodal camera set 10. In order to facilitate detection, the features may comprise at least two areas having different values in each one of said modalities.

Besides, in order to increase the performance of the calibration method 100, the features may comprise a common pattern for the different detection modalities, as will be detailed after. In addition or as an alternative, as can be seen in Fig. 4, the features may be non-symmetrical and/or non-periodic in order to avoid drifting.

In this example, the calibration pattern 30 is based on so-called AprilTags (E. Olson, "AprilTag: A robust and flexible visual fiducial system," 2011 IEEE International Conference on Robotics and Automation, 2011, pp. 3400-3407, doi: 10.1109/ICRA.2011.5979561), with the following improved features. However, other bases could be considered.

The calibration pattern 30 generally has the shape of a planar square board, however other planar or non-planar shapes are encompassed.

The calibration pattern 30 comprises a body having a first area 32 and a second area 34. As regards the color detection, the first area 32 and the second area 34 may have different colors. As regards the thermal detection, the first area 32 and the second area 34 may be configured to have different temperatures. As regards the depth detection, the first area 32 and the second area 34 may be configured to have different depths. In this example, the calibration pattern 30 thus has corresponding features (or a common pattern) for all the modalities.

For instance, the second area 34 is punctured, recessed or projecting with respect to the first area 32. In this way, different depths are obtained. Besides, conductive material 36 may be provided along a contour of either one of the first area 32 or the second area 34. In the embodiment of Fig. 4, the conductive material 36 is provided along a contour for the second area 34, which is punctured: this ensures a better dissipation of heat and enables the thermal camera to make a better difference between the first area 32 and the second area 34.

Specifically, the conductive material 36, e.g. a wire, may have a relatively high resistance in order to produce much heat with relatively low current and voltage. For instance, the conductive material 36 may be made of the resistive wire NI80 29Ga commercialized by Vap'Extreme (registered trademark), or of the resistive wire CuNi44 commercialized by Block (registered trademark; alloy as specified in DIN 46 461 - 1^{st} April 1984). The conductive material may be selected to have a resistance that is substantially independent from the temperature. For instance, the specific electrical resistance may lie between 0.25 and 1 Ω x mm²/m, for instance about 0.49 Ω x mm²/m. The average temperature constant of the electrical resistor at 20°C may be in the range 0.00004 - 0.00008. The average linear thermal expansion coefficient between 20°C - 100°C may lie between 5 x 10⁻⁶ and 20 x 10⁻⁶, e.g. about 13.5 x 10⁻⁶. The melting temperature may be greater than 1100°C, e.g. greater than 1200°C, e.g. in the range 1220°C - 1270°C. The maximum permissible wire temperature may be greater than 400°C, preferably than 500°C.

The conductive material 36 may be arranged along the contour of the second area 34 in a nearly-closed loop, in order to reflect the borders of the second area 34 while still enabling current to flow therein. The resistance of every nearly-closed loop may be adjusted to ensure as equal a temperature as possible for the conductive wire 36 over the calibration pattern.

In order to strengthen the heat difference between the first area 32 and the second area 34, the first area may be made of a relatively insulating material, such as ceramics or organic material, e.g. composites of organic fibers in a heat-insulating resin (available e.g. from Trespa (registered trademark)). In doing so, heat dissipation to the first area 32 is limited or even prevented, which enables to create a peaked heat signature (e.g. delta-distribution type) on the calibration pattern, as opposed to a flattened distribution. This enhances the calibration.

Besides, in order to further limit dissipation of heat of the conductive material 36 to the first area 32, the conductive material 36 may be supplied with current pulses. Thus, persistent heat within the conductive material 36 ensures that the conductive material 36 itself stays visible with the thermal camera, but the overall quantity of heat generated is decreased, such that less heat dissipates into the material of the first area 32.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A calibration method for calibrating a multimodal camera set (10) comprising at least two cameras (12, 14, 16) having different detection modalities, the at least two cameras (12, 14, 16) being rigidly fixed with respect to one another, the calibration method comprising:
- placing a calibration pattern (30), having features in each of said different modalities, in a field of view of the multimodal camera set (10);
- acquiring (102) at least one multimodal set of images (104) of the calibration pattern (30) with the at least two cameras (12, 14, 16), wherein each multimodal set of images comprises a first image returned by a first one (12) of the at least two cameras and a second image jointly returned by a second one (14, 16) of the at least two cameras, wherein the second camera (14, 16) has a resolution less than or equal to a resolution of the first camera (12);
- determining intrinsic characteristics (126) of the first camera (12) and a pose (124) of the calibration pattern (30) with respect to the first camera (12) based on the at least one first image returned by said first camera (12) and known characteristics (106) of the calibration pattern (30);
- for each multimodal set of images, pre-positioning (142, 162) a model of the calibration pattern (30) with respect to the second image returned by the second camera (14, 16), based on the determined pose (124) and on an estimated relative pose (144) of the second camera (14, 16) with respect to the first camera (12);
- for each multimodal set of images, detecting (146, 166) the calibration pattern in the second image;
- deriving (148) a relative pose of the second camera (14, 16) with respect to the first camera (12) based on a matching of the model of the calibration pattern (30) with the detected calibration pattern in the second image of each multimodal set of images;
- determining (150) intrinsic characteristics of the second camera (14, 16) based on known characteristics (106) of the calibration pattern (30) and a pose of the calibration pattern with respect to the second camera (14, 16),
wherein the deriving (148) the relative pose of the second camera (14) with respect to the first camera (12) and the determining (150) intrinsic characteristics of the second camera (14) are carried out sequentially and repeated one after the other for a given number of times and/or until a convergence condition is met (152), each deriving (148), as from the second iteration, taking into account the intrinsic characteristics of the second camera (14) determined at the previous iteration.

2. The calibration method of claim 1, wherein the detection modalities include at least two of color detection, thermal detection, infrared detection and depth detection.

3. The calibration method of any one of claims 1 to 2, wherein the at least two cameras (12, 14, 16) comprise a third camera (16), each of the at least one multimodal set of images comprises a third image jointly returned by the third camera (16), and the calibration method further comprises:
- for each multimodal set of images, pre-positioning (162) a model of the calibration pattern (30) in the third image returned by the third camera (16), based on the determined pose (124);
- for each multimodal set of images, detecting (164) the calibration pattern in the third image;
- deriving (169) a relative pose of the third camera (16) with respect to the first camera (12) based on a matching of the model of the calibration pattern (30) with the detected calibration pattern in the third image of each multimodal set of images.

4. The calibration method of any one of claims 1 to 3, wherein the detecting (146, 166) comprises detecting the features of the calibration pattern (30) as pixels exceeding an average value of the image in the modality of the second camera (14, 16).

5. The calibration method of any one of claims 1 to 4, wherein the at least one multimodal set of images (104) comprises a plurality of multimodal sets of images in which the location of the calibration pattern (30) varies in three dimensions in order to cover the field of view of the multimodal camera set, optionally at least 50 multimodal sets of images.

6. A calibration system for calibrating a multimodal camera set (10) comprising at least two cameras (12, 14, 16) having different detection modalities, the at least two cameras (12, 14, 16) being rigidly fixed with respect to one another, the calibration system comprising:
- a calibration pattern (30), having features in each of said different modalities, to be placed in a field of view of the multimodal camera set (10);
- an acquisition module (20A) for acquiring at least one multimodal set of images (104) of the calibration pattern (30) with the at least two cameras (12, 14, 16), each of the at least one multimodal set of images comprising a first image returned by a first one (12) of the at least two cameras and a second image jointly returned by a second one (14, 16) of the at least two cameras, wherein the second camera (14, 16) has a resolution less than or equal to a resolution of the first camera (12);
- a determination module (20B) for determining intrinsic characteristics of the first camera (12) and a pose (124) of the calibration pattern (30) with respect to the first camera (12) based on the at least one first image returned by said first camera (12) and known characteristics (106) of the calibration pattern (30);
- a pre-positioning module (20C) for, for each multimodal set of images, pre-positioning a model of the calibration pattern with respect to the second image returned by the second camera (14, 16), based on the determined pose (124) and on an estimated relative pose (144) of the second camera (14, 16) with respect to the first camera (12);
- a detection module (20D) for, for each multimodal set of images, detecting the calibration pattern in the second image;
- a deriving module (20E) for deriving a relative pose of the second camera (14) with respect to the first camera (12) based on a matching of the model of the calibration pattern (30) with the detected calibration pattern in the second image of each multimodal set of images,
wherein the calibration system is configured to determine intrinsic characteristics of the second camera (14, 16) based on known characteristics (106) of the calibration pattern (30) and a pose of the calibration pattern with respect to the second camera (14, 16), and configured such that the deriving the relative pose of the second camera (14) with respect to the first camera (12) and the determining intrinsic characteristics of the second camera (14) are carried out sequentially and repeated one after the other for a given number of times and/or until a convergence condition is met (152), each deriving (148), as from the second iteration, taking into account the intrinsic characteristics of the second camera (14) determined at the previous iteration.

7. A calibration pattern (30) for use in the calibration method of any one of claims 1 to 5, the calibration pattern having features in at least two different detection modalities.

8. The calibration pattern of claim 7, wherein the features comprise a common pattern for said different detection modalities, and/or the features are non-symmetrical and/or non-periodic.

9. The calibration pattern of claim 7 or 8, wherein the features comprise, for each of the detection modalities, at least two areas (32, 34) having different values in said modality.

10. The calibration pattern of any one of claims 7 to 9, comprising a body having a first area (32) and a second area (34), wherein the second area (34) is punctured, recessed or projecting with respect to the first area (32), and conductive material (36) is provided along a contour of the first area (32) or the second area (34).

## Patentansprüche

1. Kalibrierverfahren zum Kalibrieren eines multimodalen Kamerasatzes (10), der mindestens zwei Kameras (12, 14, 16) umfasst, die verschiedene Erkennungsmodalitäten aufweisen, wobei die mindestens zwei Kameras (12, 14, 16) im Verhältnis zueinander starr befestigt sind, wobei das Kalibrierverfahren umfasst:
- Einsetzen eines Kalibriermusters (30), das Merkmale in jeder der verschiedenen Modalitäten aufweist, in ein Blickfeld des multimodalen Kamerasatzes (10);
- Erfassen (102) mindestens eines multimodalen Satzes von Bildern (104) des Kalibriermusters (30) mit den mindestens zwei Kameras (12, 14, 16), wobei jeder multimodale Satz von Bildern ein erstes Bild, das von der ersten (12) der mindestens zwei Kameras zurückgegeben wird, und ein zweites Bild, das zusammen von einer zweiten (14, 16) der mindestens zwei Kameras zurückgegeben wird, umfasst, wobei die zweite Kamera (14, 16) eine Auflösung aufweist, die kleiner oder gleich einer Auflösung der ersten Kamera (12) ist;
- Bestimmen von intrinsischen Kennzeichen (126) der ersten Kamera (12) und einer Pose (124) des Kalibriermusters (30) im Verhältnis zu der ersten Kamera (12) basierend auf dem mindestens einen ersten Bild, das von der ersten Kamera (12) zurückgegeben wird, und von bekannten Kennzeichen (106) des Kalibriermusters (30);
- für jeden multimodalen Satz von Bildern, Vorpositionieren (142, 162) eines Modells des Kalibriermusters (30) im Verhältnis zu dem zweiten Bild, das von der zweiten Kamera (14, 16) zurückgegeben wird, basierend auf der bestimmten Pose (124) und auf einer geschätzten relativen Pose (144) der zweiten Kamera (14, 16) im Verhältnis zu der ersten Kamera (12);
- für jeden multimodalen Satz von Bildern, Erkennen (146, 166) des Kalibriermusters in dem zweiten Bild;
- Ableiten (148) einer relativen Pose der zweiten Kamera (14, 16) im Verhältnis zu der ersten Kamera (12) basierend auf einem Abgleich des Modells des Kalibriermusters (30) mit dem erkannten Kalibriermuster in dem zweiten Bild jedes multimodalen Satzes von Bildern;
- Bestimmen (150) von intrinsischen Kennzeichen der zweiten Kamera (14, 16) basierend auf bekannten Kennzeichen (106) des Kalibriermusters (30) und einer Pose des Kalibriermusters im Verhältnis zu der zweiten Kamera (14, 16),
wobei das Ableiten (148) der relativen Pose der zweiten Kamera (14) im Verhältnis zu der ersten Kamera (12) und das Bestimmen (150) der intrinsischen Kennzeichen der zweiten Kamera (14) der Reihe nach ausgeführt werden und für eine vorgegebene Anzahl von Wiederholungen und/oder bis eine Konvergenzbedingung erfüllt ist (152), nacheinander wiederholt werden, wobei jedes Ableiten (148) ab der zweiten Iteration die intrinsischen Kennzeichen der zweiten Kamera (14), die in der vorherigen Iteration bestimmt wurden, berücksichtigt.

2. Kalibrierverfahren nach Anspruch 1, wobei die Erkennungsmodalitäten mindestens zwei von Farberkennung, Wärmeerkennung, Infraroterkennung und Tiefenerkennung umfassen.

3. Kalibrierverfahren nach einem der Ansprüche 1 bis 2, wobei die mindestens zwei Kameras (12, 14, 16) eine dritte Kamera (16) umfassen, jeder des mindestens einen multimodalen Satzes von Bildern ein drittes Bild umfasst, das zusammen von der dritten Kamera (16) zurückgegeben wird, und das Kalibrierverfahren ferner umfasst:
- für jeden multimodalen Satz von Bildern, Vorpositionieren (162) eines Modells des Kalibriermusters (30) in dem dritten Bild, das von der dritten Kamera (16) zurückgegeben wird, basierend auf der bestimmten Pose (124);
- für jeden multimodalen Satz von Bildern, Erkennen (164) des Kalibriermusters in dem dritten Bild;
- Ableiten (169) einer relativen Pose der dritten Kamera (16) im Verhältnis zu der ersten Kamera (12) basierend auf einem Abgleich des Modells des Kalibriermusters (30) mit dem erkannten Kalibriermuster in dem dritten Bild jedes multimodalen Satzes von Bildern.

4. Kalibrierverfahren nach einem der Ansprüche 1 bis 3, wobei das Erkennen (146, 166) das Erkennen der Merkmale des Kalibriermusters (30) als Pixel, die einen Durchschnittswert des Bildes in der Modalität der zweiten Kamera (14, 16) überschreiten, umfasst.

5. Kalibrierverfahren nach einem der Ansprüche 1 bis 4, wobei der mindestens eine multimodale Satz von Bildern (104) eine Vielzahl von multimodalen Sätzen von Bildern umfasst, in denen die Position des Kalibriermusters (30) in drei Dimensionen variiert, um das Blickfeld des multimodalen Kamerasatzes abzudecken, wahlweise mindestens 50 multimodalen Sätzen von Bildern.

6. Kalibriersystem zum Kalibrieren eines multimodalen Kamerasatzes (10), der mindestens zwei Kameras (12, 14, 16) umfasst, die verschiedene Erkennungsmodalitäten aufweisen, wobei die mindestens zwei Kameras (12, 14, 16) im Verhältnis zueinander starr befestigt sind, wobei das Kalibriersystem umfasst:
- ein Kalibriermuster (30), das Merkmale in jeder der verschiedenen Modalitäten aufweist und in ein Blickfeld des multimodalen Kamerasatzes (10) einzusetzen ist;
- ein Erfassungsmodul (20A) zum Erfassen mindestens eines multimodalen Satzes von Bildern (104) des Kalibriermusters (30) mit den mindestens zwei Kameras (12, 14, 16), wobei jede des mindestens einen multimodalen Satzes von Bildern ein erstes Bild, das von einer ersten (12) der mindestens zwei Kameras zurückgegeben wird, und ein zweites Bild, das zusammen von einer zweiten (14, 16) der mindestens zwei Kameras zurückgegeben wird, umfasst, wobei die zweite Kamera (14, 16) eine Auflösung aufweist, die kleiner oder gleich einer Auflösung der ersten Kamera (12) ist;
- ein Bestimmungsmodul (20B) zum Bestimmen von intrinsischen Kennzeichen der ersten Kamera (12) und einer Pose (124) des Kalibriermusters (30) im Verhältnis zu der ersten Kamera (12) basierend auf dem mindestens einen ersten Bild, das von der ersten Kamera (12) zurückgegeben wird, und von bekannten Kennzeichen (106) des Kalibriermusters (30);
- ein Vorpositioniermodul (20C), um für jeden multimodalen Satz von Bildern ein Modell des Kalibriermusters im Verhältnis zu dem zweiten Bild, das von der zweiten Kamera (14, 16) zurückgegeben wird, basierend auf der bestimmten Pose (124) und auf einer geschätzten relativen Pose (144) der zweiten Kamera (14, 16) im Verhältnis zu der ersten Kamera (12) vorzupositionieren;
- ein Erkennungsmodul (20D), um für jeden multimodalen Satz von Bildern das Kalibriermuster in dem zweiten Bild zu erkennen;
- ein Ableitmodul (20E) zum Ableiten einer relativen Pose der zweiten Kamera (14) im Verhältnis zu der ersten Kamera (12) basierend auf einem Abgleich des Modells des Kalibriermusters (30) mit dem erkannten Kalibriermuster in dem zweiten Bild jedes multimodalen Satzes von Bildern,
wobei das Kalibriersystem dazu konfiguriert ist, intrinsische Kennzeichen der zweiten Kamera (14, 16) basierend auf bekannten Kennzeichen (106) des Kalibriermusters (30) und einer Pose des Kalibriermusters im Verhältnis zu der zweiten Kamera (14, 16) zu bestimmen, und derart konfiguriert ist, dass das Ableiten der relativen Pose der zweiten Kamera (14) im Verhältnis zu der ersten Kamera (12) und das Bestimmen von intrinsischen Kennzeichen der zweiten Kamera (14) der Reihe nach ausgeführt werden und mehrmals, und/oder bis eine Konvergenzbedingung erfüllt ist (152), nacheinander wiederholt werden, wobei jedes Ableiten (148), wie etwa von der zweiten Iteration, die intrinsischen Kennzeichen der zweiten Kamera (14), die in der vorherigen Iteration bestimmt wurden, berücksichtigt.

7. Kalibriermuster (30) zur Verwendung in dem Kalibrierverfahren nach einem der Ansprüche 1 bis 5, wobei das Kalibriermuster Merkmale in mindestens zwei verschiedenen Erkennungsmodalitäten aufweist.

8. Kalibriermuster nach Anspruch 7, wobei die Merkmale ein gemeinsames Muster für die verschiedenen Erkennungsmodalitäten umfassen, und/oder die Merkmale nicht symmetrisch und/oder nicht periodisch sind.

9. Kalibriermuster nach Anspruch 7 oder 8, wobei die Merkmale für jede der Erkennungsmodalitäten mindestens zwei Bereiche (32, 34) umfassen, die verschiedene Werte in der Modalität aufweisen.

10. Kalibriermuster nach einem der Ansprüche 7 bis 9, umfassend einen Körper, der einen ersten Bereich (32) und einen zweiten Bereich (34) aufweist, wobei der zweite Bereich (34) im Verhältnis zu dem ersten Bereich (32) durchstochen, vertieft oder vorstehend ist, und ein leitfähiges Material (36) entlang einer Kontur des ersten Bereichs (32) oder des zweiten Bereichs (34) bereitgestellt wird.

## Revendications

1. Procédé d'étalonnage destiné à étalonner un ensemble de caméras multimodales (10) comprenant au moins deux caméras (12, 14, 16) ayant des modalités de détection différentes, les au moins deux caméras (12, 14, 16) étant fixées de manière rigide les unes par rapport aux autres, le procédé d'étalonnage comprenant les étapes suivantes :
- placer un motif d'étalonnage (30) ayant des caractéristiques dans chacune desdites modalités différentes dans un champ de vision de l'ensemble de caméras multimodales (10) ;
- acquérir (102) au moins un ensemble multimodal d'images (104) du motif d'étalonnage (30) à l'aide des au moins deux caméras (12, 14, 16), dans lequel chaque ensemble multimodal d'images comprend une première image retournée par une première (12) des au moins deux caméras et une deuxième image retournée conjointement par une deuxième (14, 16) des au moins deux caméras, dans lequel la deuxième caméra (14, 16) a une résolution inférieure ou égale à une résolution de la première caméra (12) ;
- déterminer les caractéristiques intrinsèques (126) de la première caméra (12) et une pose (124) du motif d'étalonnage (30) par rapport à la première caméra (12) sur la base de l'au moins une première image retournée par ladite première caméra (12) et de caractéristiques connues (106) du motif d'étalonnage (30) ;
- pour chaque ensemble multimodal d'images, prépositionner (142, 162) un modèle du motif d'étalonnage (30) par rapport à la deuxième image retournée par la deuxième caméra (14, 16), sur la base de la pose (124) déterminée et d'une pose relative estimée (144) de la deuxième caméra (14, 16) par rapport à la première caméra (12) ;
- pour chaque ensemble multimodal d'images, détecter (146, 166) le motif d'étalonnage dans la deuxième image ;
- déduire (148) une pose relative de la deuxième caméra (14, 16) par rapport à la première caméra (12) sur la base d'une mise en correspondance du modèle du motif d'étalonnage (30) avec le motif d'étalonnage détecté dans la deuxième image de chaque ensemble multimodal d'images ;
- déterminer (150) des caractéristiques intrinsèques de la deuxième caméra (14, 16) sur la base de caractéristiques connues (106) du motif d'étalonnage (30) et d'une pose du motif d'étalonnage par rapport à la deuxième caméra (14, 16),
dans lequel la déduction (148) de la pose relative de la deuxième caméra (14) par rapport à la première caméra (12) et la détermination (150) des caractéristiques intrinsèques de la deuxième caméra (14) sont effectuées séquentiellement et répétées l'une après l'autre un nombre donné de fois et/ou jusqu'à ce qu'une condition de convergence soit satisfaite (152), chaque déduction (148) à partir de la deuxième itération tenant compte des caractéristiques intrinsèques de la deuxième caméra (14) déterminées lors de l'itération précédente.

2. Procédé d'étalonnage selon la revendication 1, dans lequel les modalités de détection comportent au moins deux parmi la détection de couleur, la détection thermique, la détection infrarouge et la détection de profondeur.

3. Procédé d'étalonnage selon l'une des revendications 1 et 2, dans lequel les au moins deux caméras (12, 14, 16) comprennent une troisième caméra (16), chacun du ou des ensembles multimodaux d'images comprend une troisième image retournée conjointement par la troisième caméra (16), et le procédé d'étalonnage comprend en outre les étapes suivantes :
- pour chaque ensemble multimodal d'images, prépositionner (162) un modèle du motif d'étalonnage (30) dans la troisième image retournée par la troisième caméra (16) sur la base de la pose (124) déterminée ;
- pour chaque ensemble multimodal d'images, détecter (164) le motif d'étalonnage dans la troisième image ;
- déduire (169) une pose relative de la troisième caméra (16) par rapport à la première caméra (12) sur la base d'une mise en correspondance du modèle du motif d'étalonnage (30) avec le motif d'étalonnage détecté dans la troisième image de chaque ensemble multimodal d'images.

4. Procédé d'étalonnage selon l'une des revendications 1 à 3, dans lequel la détection (146, 166) comprend la détection des caractéristiques du motif d'étalonnage (30) sous forme de pixels dépassant une valeur moyenne de l'image dans la modalité de la deuxième caméra (14, 16).

5. Procédé d'étalonnage selon l'une des revendications 1 à 4, dans lequel l'au moins un ensemble multimodal d'images (104) comprend une pluralité d'ensembles d'images multimodales où l'emplacement du motif d'étalonnage (30) varie en trois dimensions afin de couvrir le champ de vision de l'ensemble de caméras multimodales, facultativement au moins 50 ensembles d'images multimodales.

6. Système d'étalonnage pour étalonner un ensemble de caméras multimodales (10) comprenant au moins deux caméras (12, 14, 16) ayant des modalités de détection différentes, les au moins deux caméras (12, 14, 16) étant fixées de manière rigide les unes par rapport aux autres, le système d'étalonnage comprenant :
- un motif d'étalonnage (30) ayant des caractéristiques dans chacune desdites modalités différentes destiné à être placé dans un champ de vision de l'ensemble de caméras multimodales (10) ;
- un module d'acquisition (20A) pour acquérir au moins un ensemble multimodal d'images (104) du motif d'étalonnage (30) à l'aide des au moins deux caméras (12, 14, 16), chacun du ou des ensembles multimodaux d'images comprenant une première image retournée par une première (12) des au moins deux caméras et une deuxième image retournée conjointement par une deuxième (14, 16) des au moins deux caméras, dans lequel la deuxième caméra (14, 16) a une résolution inférieure ou égale à une résolution de la première caméra (12) ;
- un module de détermination (20B) pour déterminer les caractéristiques intrinsèques de la première caméra (12) et une pose (124) du motif d'étalonnage (30) par rapport à la première caméra (12) sur la base de l'au moins une première image retournée par ladite première caméra (12) et de caractéristiques connues (106) du motif d'étalonnage (30) ;
- un module de pré-positionnement (20C) pour, pour chaque ensemble multimodal d'images, prépositionner un modèle du motif d'étalonnage par rapport à la deuxième image retournée par la deuxième caméra (14, 16), sur la base de la pose (124) déterminée et d'une pose relative estimée (144) de la deuxième caméra (14, 16) par rapport à la première caméra (12) ;
- un module de détection (20D) pour, pour chaque ensemble multimodal d'images, détecter le motif d'étalonnage dans la deuxième image ;
- un module de déduction (20E) pour déduire une pose relative de la deuxième caméra (14) par rapport à la première caméra (12) sur la base d'une mise en correspondance du modèle du motif d'étalonnage (30) avec le motif d'étalonnage détecté dans la deuxième image de chaque ensemble multimodal d'images,
dans lequel le système d'étalonnage est configuré pour déterminer les caractéristiques intrinsèques de la deuxième caméra (14, 16) sur la base de caractéristiques connues (106) du motif d'étalonnage (30) et d'une pose du motif d'étalonnage par rapport à la deuxième caméra (14, 16), et configuré de sorte que la déduction de la pose relative de la deuxième caméra (14) par rapport à la première caméra (12) et la détermination des caractéristiques intrinsèques de la deuxième caméra (14) soient effectuées séquentiellement et répétées l'une après l'autre un nombre donné de fois et/ou jusqu'à ce qu'une condition de convergence soit satisfaite (152), chaque déduction (148) à partir de la deuxième itération tenant compte des caractéristiques intrinsèques de la deuxième caméra (14) déterminées lors de l'itération précédente.

7. Motif d'étalonnage (30) destiné à être utilisé dans le procédé d'étalonnage selon l'une des revendications 1 à 5, le motif d'étalonnage ayant des caractéristiques dans au moins deux modalités de détection différentes.

8. Motif d'étalonnage selon la revendication 7, dans lequel les caractéristiques comprennent un motif commun pour lesdites modalités de détection différentes, et/ou les caractéristiques sont non symétriques et/ou non périodiques.

9. Motif d'étalonnage selon la revendication 7 ou 8, dans lequel les caractéristiques comprennent, pour chacune des modalités de détection, au moins deux zones (32, 34) ayant des valeurs différentes dans ladite modalité.

10. Motif d'étalonnage selon l'une des revendications 7 à 9, comprenant un corps ayant une première zone (32) et une deuxième zone (34), dans lequel la deuxième zone (34) est perforée, évidée ou en saillie par rapport à la première zone (32), et un matériau conducteur (36) est prévu le long d'un contour de la première zone (32) ou de la deuxième zone (34).
